# EUROPÄISCHE PATENTSCHRIFT

(11) **EP 2 372 810 B1**
(45) Veröffentlichungstag und Bekanntmachung des Hinweises auf die Patenterteilung: **30.01.2013**
(21) Anmeldenummer: 11002201.9
(22) Anmeldetag: 17.03.2011
(51) Int. Cl.: H01M 2/10, H01M 10/50

(54) **Vorrichtung zur elektrischen Energiespeicherung, insbesondere für ein Kraftfahrzeug**
Device for electric energy storage, in particular for a motor vehicle
Dispositif de stockage d'énergie électrique, notamment pour un véhicule automobile

(30) Priorität: 26.03.2010 DE 102010012925
(43) Veröffentlichungstag der Anmeldung: 05.10.2011
(73) Patentinhaber: Audi AG, 85045 Ingolstadt (DE)
(72) Erfinder: Werum, Daniel, 74172 Obereisesheim (DE)

(56) Entgegenhaltungen:
- EP-A1- 2 068 390
- EP-A2- 2 065 963
- US-A1- 2006 216 582

## Beschreibung

Die Erfindung betrifft eine Vorrichtung zur elektrischen Energiespeicherung, insbesondere für ein Kraftfahrzeug, umfassend ein Batteriemodul, insbesondere ein Lithium-Ionen-Batteriemodul gemäß Oberbegriff des Patentanspruchs 1.

Es ist bekannt, dass eine Batterie zur Anwendung in Kraftfahrzeugen, insbesondere Kraftfahrzeugen mit Hybridantrieb oder Elektroantrieb, einen Zell- oder Akkublock aus mehreren elektrisch in Reihe und/oder parallel geschalteten Batteriezellen, bspw. Lithium-lonen-Zellen aufweist. Jede Zelle ist von einer metallischen Hülle, ähnlich der von handelsüblichen Batteriezellen, umgeben.

Diese Zellen werden in sogenannten Modulen als Unterbaugruppe zusammengefasst. Die Module werden wiederum über Verbindungselemente gruppiert und diese zusammengefassten Module mit einer Hülle versehen. Ein solcher Zellverbund und die Hülle werden auf einer Bodenplatte eine Fahrzeugkarosserie befestigt, über welche der gesamte Verbund an die Fahrzeugstruktur angebunden wird.

Um die Betriebstemperatur der einzelnen Zellen zu gewährleisten, werden diese mittels Kühlelemente, bspw. Heat-Pipes temperiert, die über Kühlplatten mit einem Klimatisierungskreislauf verbunden sind. Als Wärmetauscher dient eine Kühlplatte, durch welche das Kühlmedium fließt.

So ist aus der DE 10 2007 061 562 A1 eine gattungsbildende Vorrichtung zur Energiespeicherung bekannt, bei der eine Vielzahl von zylindrischen Einzelzellen, die jeweils als Lithium-lonen-Batterie ausgebildet sind, mit ihrer Unterseite auf einem Kühlkörper angeordnet sind, der von einem Fluid in Form eine Kältemittels durchströmt und somit gekühlt wird. Ferner weist dieser Kühlkörper prismenartige Fortsätze auf, die sich senkrecht aus seiner Oberfläche erheben und zwischen den benachbarten zylindrischen Einzelzellen verlaufen. Der Kühlkörper, die Fortsätze und die Einzelzellen sind mit einer zwischen ihnen angeordneten Vergussmasse mechanisch und thermisch miteinander zu einem Block vergossen und auf ihrer Oberseite mittels Kontaktbrücken elektrisch miteinander verbunden. Dieser Akkublock wird von einer Isolierwand umgeben in ein Gehäuse untergebracht, wobei zwischen der Außenwand dieses Gehäuses und der Isolierwand ein von Luft zwangsdurchströmter Spülkanal vorgesehen ist.

Der Nachteil dieses bekannten Batterieverbundes besteht darin, dass dieser aus vielen Einzelteilen besteht und hierfür ein aufwendiges Herstellungsverfahren, bspw. hinsichtlich der Herstellung des Vergusses, erforderlich ist.

Des Weiteren ist aus WO 2009/029138 ein Batteriemodul bekannt, das aus einem Stapel aus mehreren plattenförmigen Akkublöcken, die jeweils eine Vielzahl von Lithium-lonen-Einzelzellen beinhalten, besteht. Jeder dieser plattenförmigen Akkublöcke stellt eine eigenständige mechanische Baugruppe dar, die ein mechanisches Befestigungssystem, eine Batterie-überwachungselektronik, ein Kühlsystem und verschiedene Sicherheitssysteme für den Schutz des Fahrzeugs und dessen Insassen umfasst. Das Kühlsystem besteht aus Kühlschlangen, die mäanderförmig zwischen den in Reihen und Spalten angeordneten Einzelzellen geführt werden und durch die eine gekühltes Fluid gepumpt wird. Das Kühlsystem jeder dieser plattenförmigen Akkublöcke ist an einer aus zwei Röhren bestehenden Sammelleitung angeschlossen.

Auch ein solches bekanntes Batteriemodul besteht aus einem komplizierten Aufbau mit einer großen Anzahl von Einzelteilen, wodurch deren Herstellungskosten sehr hoch sind.

Aufgabe der Erfindung ist es daher, eine Vorrichtung zur elektrischen Energiespeicherung der eingangs genannten Art anzugeben, die mit einem einfachen und damit kostengünstigen Aufbau realisiert werden kann, ohne jedoch die Leistungsfähigkeit und Sicherheit zu beeinträchtigen.

Diese Aufgabe wird gelöst durch eine Vorrichtung zur elektrischen Energiespeicherung mit den Merkmalen des Patentanspruchs 1.

Bei einer solchen Vorrichtung zur elektrischen Energiespeicherung, insbesondere für ein Kraftfahrzeug, die
- ein Batteriemodul, insbesondere ein Lithium-lonen-Batteriemodul, mit einer Mehrzahl in Serie und/oder parallel miteinander verschalteten Einzelzellen,
- wenigstens eine als Trägerplatte für mehrere Einzelzellen ausgebildete Kühlvorrichtung, die von einem Kältemittel durchströmt wird, umfasst, ist erfindungsgemäß vorgesehen, dass
- mehrere Trägerplatten mit Aufnahmevorrichtungen zur Aufnahme von Einzelzellen übereinander angeordnet sind,
- Wärmeleiteinrichtungen, insbesondere Wärmeleitrohre in thermischen Kontakt zwischen den Einzelzellen jeweils auf den Trägerplatten angeordnet sind,
- die Trägerplatten jeweils thermisch mit den Wärmeleiteinrichtungen verbunden sind, und
- die Trägerplatten jeweils Stromleitmittel zum elektrischen Verbinden derjenigen Einzelzellen, die jeweils in der Ebene der darunter angeordneten Trägerplatte angeordnet sind, aufweisen.

Bei dieser erfindungsgemäßen Vorrichtung übernimmt die Trägerplatte nicht nur die Funktion einer Kühlvorrichtung, sondern sowohl die Funktion der mechanischen Anbindung der Einzelzellen an die Trägerplatten als auch deren elektrischen Kontaktierung. Dies führt zu einem montagefreundlichen Zusammenbau mehrerer Trägerplatten zu einem Batteriemodul, da damit gleichzeitig die elektrische Kontaktierung der Einzelzellen mit den Stromleitmitteln sichergestellt wird.

Ferner kann eine derartig erfindungsgemäß ausgebildete Trägerplatte als leichtes und kostengünstiges Kunststoffteil gefertigt werden. Besonders vorteilhaft ist die leichte Stapelbarkeit mehrerer, jeweils eine Vielzahl von Einzelzellen aufnehmender Trägerplatten, wobei raumsparend jeweils die Unterseite einer Trägerplatte die Kontaktierungen für die darunter auf einer Trägerplatte angeordneten Einzelzellen aufweist.

Bei einer vorteilhaften Weiterbildung der Erfindung weisen die Trägerplatten jeweils einen Kühlkanal zur Aufnahme des Kältemittels auf, wobei die Kühlkanäle jeweils thermisch mit den Wärmeleiteinrichtungen verbunden sind und vorzugsweise mäanderförmig in der Ebene einer Trägerplatte geführt werden.

Gemäß einer besonders bevorzugten Ausführungsform der Erfindung weisen die Trägerplatten als Aufnahmevorrichtungen an die Grundfläche der Einzelzellen angepasste Vertiefungen zur Lagefixierung der Einzelzellen auf. Damit können die Einzelzellen einfach auf eine solche Trägerplatte montiert werden, ohne dass weitere Verbindungsmittel erforderlich wären. Der gesamte Stapel aus mehreren solcher jeweils Einzelzellen tragender Trägerplatten wird mittels Spannelementen verbunden.

Weiterhin weisen die Trägerplatten gemäß einer bevorzugten Weiterbildung der Erfindung Signalleitmittel zum Anschluss von die Einzelzellen überwachenden Sensormittel auf.

In besonders vorteilhafter Weise wird eine Trägerplatte zweiteilig mit einer Kühlplatte und einer Abdeckplatte aufgebaut, wobei ein Kühlkanal auf der Rückseite der Kühlplatte in Form einer nutförmigen Vertiefung realisiert und diese durch die Abdeckplatte zu einem vollständigen Querschnitt ergänzt wird. Dabei hat es sich als besonders günstig erwiesen, die Stromleitmittel und/oder die Signalleitmittel in dieser Abdeckplatte zu integrieren.

Schließlich können die Trägerplatten, insbesondere die Kühlplatten und die Abdeckplatten jeweils als Spritzgussteil hergestellt werden, wodurch sich diese Teile besonders kostengünstig herstellen lassen, wobei die Stromleitmittel und/oder die Signalleitmittel mittels eines Spritzgussverfahrens in die Trägerplatte bzw. Abdeckplatte eingespritzt werden.

Die Erfindung wird nachfolgend anhand eines Ausführungsbeispiels unter Bezugnahme auf die beigefügten Figuren ausführlich beschrieben. Es zeigen:
- Figur 1: eine schematische perspektivische Detailansicht eines Ausführungsbeispiels einer erfindungsgemäßen Vorrichtung,
- Figur 2: eine schematische perspektivische Draufsicht auf die Oberseite von zwei Trägerplatten der erfindungsgemäßen Vorrichtung nach Figur 1,
- Figur 3: eine schematische perspektivische Draufsicht auf die Unterseite einer Kühlplatte einer Trägerplatte der erfindungsgemäßen Vorrichtung nach Figur 1 oder 2, und
- Figur 4: eine schematische perspektivische Draufsicht auf die Unterseite einer Abdeckplatte einer Trägerplatte der erfindungsgemäßen Vorrichtung nach Figur 1 oder 2 mit integrierten elektrischen Kontakten.

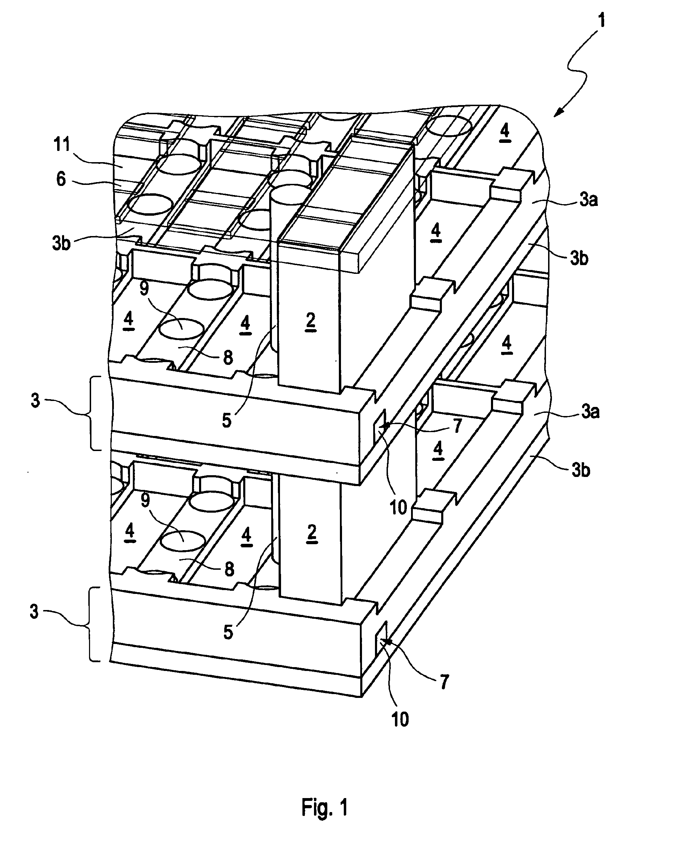

Figur 1 zeigt eine erfindungsgemäße Vorrichtung zur elektrischen Energiespeicherung, insbesondere für ein Kraftfahrzeug in einer Detailansicht mit zwei kongruent übereinander angeordneten Trägerplatten 3, wobei zur Vereinfachung auf jeder Trägerplatte 3 nur eine Einzelzelle 2, hier eine Lithium-Ionen-Zelle angeordnet ist. Jede dieser Trägerplatten 3 besteht aus einer Kühlplatte 3a und einer auf ihrer Rückseite angeordneten Abdeckplatte 3b. Eine weitere Abdeckplatte 3b deckt die auf der oberen Trägerplatte 3 angeordneten Einzelzellen 2 ab.

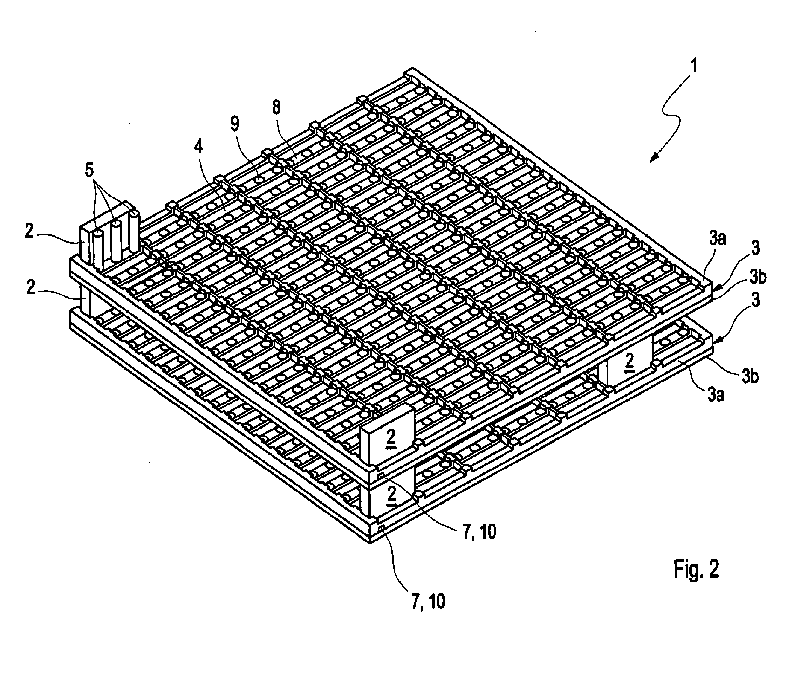

Die Figur 2 zeigt eine perspektivische Draufsicht auf die oberste Trägerplatte 3, jedoch ohne die in Figur 1 dargestellte Abdeckplatte 3b, die die oberen Einzelzellen 2 abdeckt.

Die Oberseite der Kühlplatten 3a weisen zur Lagefixierung eine regelmäßige Struktur auf. Diese Struktur besteht aus rechteckförmigen Aussparungen 4, die der rechteckförmigen Grundfläche der Einzelzellen 2 entsprechen, so dass diese in diese Aussparungen 4 gesteckt werden können. Die aufgrund dieser Struktur zwischen den Aussparungen 4 entstehenden Stege 8 weisen kreisförmige Vertiefungen 9 zur Aufnahme von zwischen den Einzelzellen 2 angeordneten Wärmeleitvorrichtungen 5, hier Wärmleitrohre, auch Heat-Pipes genannt, auf.

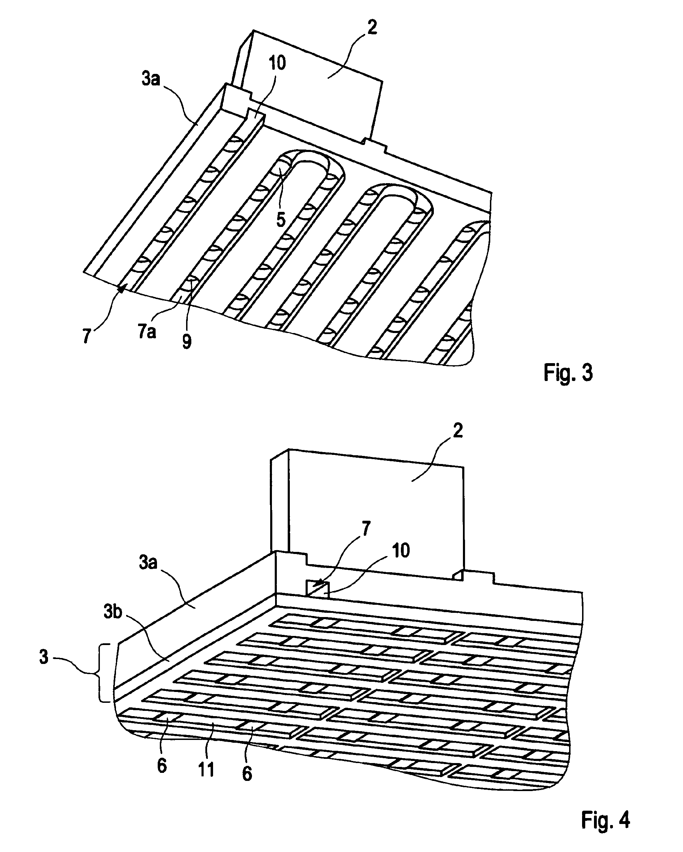

Wie in Figur 3 mit einer Draufsicht auf die Rückseite der Kühlplatte 3a gezeigt ist, dienen die kreisförmigen Vertiefungen 9 zur thermischen Kontaktierung der Wärmeleitrohre 5 mit einem in einem Kühlkanal 7 fließenden Kältemittel. Dieser Kühlkanal 7 wird einmal durch eine nutförmige Vertiefung 7a auf der Rückseite der Kühlplatte 3a und andererseits durch die Abdeckplatte 3a zu einem geschlossenen Querschnitt ergänzt. Wie aus Figur 3 ersichtlich, läuft der Kühlkanal 7 bzw. 7a mäanderförmig in der Kühlplatte 3a, so dass alle zwischen den Einzelzellen 2 angeordneten Wärmeleitrohre 5 mit dem Kühlkanal 7 bzw. 7a verbunden werden, wobei gemäß den Figuren 1 bis 3 jeweils drei Wärmeleitrohre 5 zwischen zwei Einzelzellen 2 angeordnet sind. Eine Eingangsöffnung 10 wird mit einem Kältemittelreservoir (nicht dargestellt) verbunden, aus dem das Kältemittel in die Kühlkanäle 7 der Trägerplatten 3 gepumpt wird. Über eine entsprechende Ausgangsöffnung (nicht dargestellt) wird das Kältemittel in das Kältemittelreservoir zurückgeführt.

Wie in Figur 1 und in Figur 4 dargestellt ist, sind in die Abdeckplatte Stromleitmittel 6 als elektrische Verbindungskontakte integriert, um die Einzelzellen 2 untereinander elektrisch in der gewünschten Weise (parallel, seriell oder sowohl parallel und seriell) zu verbinden.

In Figur 1 werden die von der oberen Trägerplatte 3 aufgenommenen Einzelzellen 2 von den in der diese abdeckenden Abdeckplatte 3b integrierten Stromleitmittel 6 kontaktiert.

Wie aus der Draufsicht auf die Rückseite der Abdeckplatte 3b gemäß Figur 4 ersichtlich ist, sind nicht nur die Stromleitmittel 6 in diese Abdeckplatte 3b integriert, sondern diese Rückseite ist entsprechend der Vorderseite der Kühlplatte 3a ebenso strukturiert, indem dort in gleicher Weise an die Grundfläche der Einzelzellen 2 angepasste Aussparungen 11 vorgesehen sind, so dass durch das Einstecken der in der darunterliegenden Trägerplatte 3 angeordneten Einzelzellen 2 in diese Aussparungen 11 gleichzeitig ein elektrischen Kontakt mit den Stromleitmitteln 6 erreicht wird. Eine entsprechende Strukturierung ist auch auf der Unterseite der Abdeckplatte 3b gemäß Figur 1 vorgesehen, die die auf der oberen Trägerplatte 3 angeordneten Einzelzellen 2 abdeckt.

In einem entsprechend Figur 1 dargestellten Verbund aus mehreren Trägerplatten 3 werden somit die zwischen zwei Trägerplatten 3 liegenden Einzelzellen 2 sowohl in auf der Oberseite der Kühlplatte 3a vorgesehenen Aussparungen 4 als auch von in der Abdeckplatte 3b der darüber liegenden Trägerplatte 3 eingebrachten Aussparungen 11 gehalten und in ihrer Lage fixiert. Der gesamte Verbund wird durch Spannelemente (nicht dargestellt) zusammengehalten.

Neben den Stromleitmitteln 6 können auch Signalleitmittel (nicht dargestellt) in der Abdeckplatte 3b integriert werden, die bspw. Sensorsignale von Temperatursensoren nach außen leiten.

Das Ausführungsbeispiel gemäß den Figuren 1 bis 4 zeigen quaderförmige Einzelzellen als Lithium-lonen-Zellen. Die Erfindung ist natürlich nicht auf diese Form von Einzelzellen eingeschränkt, sondern für jede sonstige geometrische Form, insbesondere auch für zylinderförmige Einzelzellen geeignet.

Die eine Trägerplatte 3 bildende Kühlplatte 3a und Abdeckplatte 3b können als Spritzgussteile hergestellt werden, wobei in die Abdeckplatte 3b die Stromleitmittel 6 und ggf. auch die Signalleitmittel eingespritzt werden.

Zusätzlich können in diese Kunststoffteile auch mechanische Verbindungselement mit eingespritzt werden.

### Bezugszeichen

- 1: Batteriemodul
- 2: Einzelzelle
- 3: Trägerplatte
- 3a: Kühlplatte
- 3b: Abdeckplatte
- 4: Aufnahmevorrichtungen, Aussparungen
- 5: Wärmeleiteinrichtungen, Wärmeleitrohre, Heat-Pipes
- 6: Stromleitmittel
- 7: Kühlvorrichtung, Kühlkanal
- 8: Stege zwischen den Aussparungen 4
- 9: kreisförmigen Vertiefungen zur Aufnahme der Wärmeleitrohre 5
- 10: Eingangsöffnung
- 11: Aussparung auf der Rückseite der Abdeckplatte 3b

## Patentansprüche

1. Vorrichtung zur elektrischen Energiespeicherung, insbesondere für ein Kraftfahrzeug, umfassend
- ein Batteriemodul (1), insbesondere ein Lithium-Ionen-Batteriemodul, mit einer Mehrzahl in Serie und/oder parallel miteinander verschalteten Einzelzellen (2),
- wenigstens eine als Trägerplatte (3, 3a, 3b) für mehrere Einzelzellen (2) ausgebildete Kühlvorrichtung (7), die von einem Kältemittel durchströmt wird,
**dadurch gekennzeichnet, dass**
- mehrere Trägerplatten (3, 3a, 3b) mit Aufnahmevorrichtungen (4) zur Aufnahme von Einzelzellen (2) übereinander angeordnet sind,
- Wärmeleiteinrichtungen (5), insbesondere Wärmeleitrohre in thermischen Kontakt zwischen den Einzelzellen (2) jeweils auf den Trägerplatten (3, 3a, 3b) angeordnet sind,
- die Trägerplatten (3, 3a, 3b) jeweils thermisch mit den Wärmeleiteinrichtungen (5) verbunden sind, und
- die Trägerplatten (3, 3a, 3b) jeweils Stromleitmittel (6) zum elektrischen Verbinden derjenigen Einzelzellen (2), die jeweils in der Ebene der darunter angeordneten Trägerplatte (3, 3a, 3b) angeordnet sind, aufweisen.

2. Vorrichtung nach Anspruch 1,
**dadurch gekennzeichnet, dass**
- die Trägerplatten (3, 3a, 3b) jeweils einen Kühlkanal zur Aufnahme des Kältemittels aufweisen, und
- die Kühlkanäle jeweils thermisch mit den Wärmeleiteinrichtungen verbunden sind.

3. Vorrichtung nach Anspruch 1 oder 2,
**dadurch gekennzeichnet, dass**
die Trägerplatten (3, 3a, 3b) als Aufnahmevorrichtungen (4) an die Grundfläche der Einzelzellen (2) angepasste Vertiefungen zur Lagefixierung der Einzelzellen (2) aufweisen.

4. Vorrichtung nach einem der vorhergehenden Ansprüche,
**dadurch gekennzeichnet, dass**
die Trägerplatten (3, 3a, 3b) Signalleitmittel zum Anschluss von die Einzelzellen (2) überwachenden Sensormittel aufweisen

5. Vorrichtung nach einem der vorhergehenden Ansprüche,
**dadurch gekennzeichnet, dass**
die Trägerplatte (3) mit einer Kühlplatte (3a) und einer Abdeckplatte (3b) aufgebaut ist, wobei die Kühlplatte (3a) auf der Rückseite jeweils nutförmige Vertiefungen (7a) aufweisen, die zur Bildung jeweils eines Kühlkanals (7) von einer Abdeckplatte (3b) abgedeckt werden.

6. Vorrichtung nach Anspruch 5,
**dadurch gekennzeichnet, dass**
die Stromleitmittel (6) und/oder die Signalleitmittel in der Abdeckplatte (3b) integriert sind.

7. Vorrichtung nach einem der vorhergehenden Ansprüche,
**dadurch gekennzeichnet, dass**
die Trägerplatten (3, 3a, 3b) jeweils einen Kühlkanal (7) aufweisen, der mäanderförmig in der Trägerplatte (3, 3a, 3b) geführt ist.

8. Vorrichtung nach einem der vorhergehenden Ansprüche
**dadurch gekennzeichnet, dass**
die Trägerplatte (3, 3a, 3b) als Spritzgussteil hergestellt wird.

9. Vorrichtung nach einem der Ansprüche 5 bis 7,
**dadurch gekennzeichnet, dass**
die Kühlplatte (3a) und die Abdeckplatte (3b) als Spritzgussteil hergestellt wird.

## Claims

1. Device for electrical energy storage, in particular for a motor vehicle, comprising:
- a battery module (1), in particular a lithium-ion battery module, comprising a plurality of individual cells (2) connected to one another in series and/or in parallel,
- at least one cooling device (7) which is designed as a carrier plate (3, 3a, 3b) for a plurality of individual cells (2) and through which a refrigerant flows, **characterised in that**
- a plurality of carrier plates (3, 3a, 3b) comprising receiving devices (4) for receiving individual cells (2) are arranged in a stacked manner,
- heat conducting apparatuses (5), in particular heat conducting pipes in thermal contact between the individual cells (2) are arranged on the carrier plates (3, 3a, 3b) in each case,
- the carrier plates (3, 3a, 3b) are thermally connected to the heat conducting apparatuses (5) in each case, and
- the carrier plates (3, 3a, 3b) comprise in each case current conducting means (6) for electrically connecting the individual cells (2) which are arranged in the plane of the carrier plate (3, 3a, 3b) arranged below.

2. Device according to claim 1, **characterised in that**
- the carrier plates (3, 3a, 3b) comprise in each case a cooling conduit for receiving the refrigerant, and
- the cooling conduits are in each case thermally connected to the heat conducting apparatuses.

3. Device according to either claim 1 or claim 2, **characterised in that** the carrier plates (3, 3a, 3b) comprise, as receiving devices (4), recesses adapted to the base of the individual cells (2) for fixing the position of the individual cells (2).

4. Device according to any of the preceding claims, **characterised in that** the carrier plates (3, 3a, 3b) comprise signal transmission means for connecting sensor means monitoring the individual cells (2).

5. Device according to any of the preceding claims, **characterised in that** the carrier plate (3) is constructed using a cooling plate (3a) and a cover plate (3b), the rear side of the cooling plate (3a) comprising in each case groove-shaped recesses (7a) which are covered by a cover plate (3b) to form a cooling conduit (7) in each case.

6. Device according to claim 5, **characterised in that** the current conducting means (6) and/or the signal transmission means are integrated in the cover plate (3b).

7. Device according to any of the preceding claims, **characterised in that** the carrier plates (3, 3a, 3b) comprise in each case a cooling conduit (7) which is guided in a meandering shape in the carrier plate (3, 3a, 3b).

8. Device according to any of the preceding claims, **characterised in that** the carrier plate (3, 3a, 3b) is produced as an injection moulded part.

9. Device according to any of claims 5 to 7, **characterised in that** the cooling plate (3a) and the cover plate (3b) are produced as injection moulded parts.

## Revendications

1. Dispositif de stockage d'énergie électrique, en particulier pour un véhicule automobile, comprenant :
- un module de batterie (1), en particulier un module de batterie à ions de lithium avec une pluralité de piles individuelles (2) commutées l'une à l'autre en série et/ou en parallèle,
- au moins un dispositif de refroidissement (7) conformé en plaque de support (3, 3a, 3b) pour plusieurs piles individuelles (2) et qui est parcouru par un agent réfrigérant,
**caractérisé en ce que** :
- plusieurs plaques de support (3, 3a, 3b) sont aménagées l'une au-dessus de l'autre avec des dispositifs récepteurs (4) pour recevoir des piles individuelles (2),
- des dispositifs thermoconducteurs (5), en particulier des tubes thermoconducteurs, sont aménagés en contact thermique entre les piles individuelles (2), respectivement, sur les plaques de support (3), 3a, 3b),
- les plaques de support (3, 3a, 3b) sont raccordées respectivement au plan thermique avec les dispositifs thermoconducteurs (5), et
- les plaques de support (3, 3a, 3b) présentent respectivement des moyens conducteurs de courant (6) pour connecter électriquement les piles individuelles (2) qui sont aménagées respectivement dans le plan de la plaque de support (3, 3a, 3b) agencée en dessous.

2. Dispositif selon la revendication 1,
**caractérisé en ce que** :
- les plaques de support (3, 3a, 3b) présentent respectivement un canal de refroidissement pour recevoir le réfrigérant et
- les canaux de refroidissement sont raccordés respectivement au plan thermique avec les dispositifs thermoconducteurs.

3. Dispositif selon la revendication 1 ou la revendication 2, **caractérisé en ce que** les plaques de support (3, 3a, 3b) présentent des cavités ménagées comme dispositifs récepteurs (4) sur la surface de base des piles individuelles (2) pour fixer les piles individuelles (2) en position.

4. Dispositif selon l'une quelconque des revendications précédentes,
**caractérisé en ce que** les plaques de support (3, 3a, 3b) présentent des moyens de signalisation pour raccorder des moyens de détection contrôlant les piles individuelles (2).

5. Dispositif selon l'une quelconque des revendications précédentes,
**caractérisé en ce que** la plaque de support (3) est conçue avec une plaque de refroidissement (3a) et une plaque de recouvrement (3b), dans lequel la plaque de refroidissement (3a) présente au verso respectivement des cavités en forme d'encoches (7a), qui sont recouvertes par une plaque de recouvrement (3b) pour former respectivement un canal de refroidissement (7).

6. Dispositif selon la revendication 5,
**caractérisé en ce que** les moyens conducteurs de courant (6) et/ou les moyens de signalisation sont intégrés à la plaque de recouvrement (3b).

7. Dispositif selon l'une quelconque des revendications précédentes,
**caractérisé en ce que** les plaques de support (3, 3a, 3b) présentent respectivement un canal de refroidissement (7) qui est guidé dans la plaque de support (3, 3a, 3b) en forme de méandres.

8. Dispositif selon l'une quelconque des revendications précédentes,
**caractérisé en ce que** la plaque de support (3, 3a, 3b) est fabriquée sous la forme d'une pièce moulée par injection.

9. Dispositif selon l'une quelconque des revendications 5 à 7,
**caractérisé en ce que** la plaque de refroidissement (3a) et la plaque de recouvrement (3b) sont fabriquées sous la forme d'une pièce moulée par injection.
